# EUROPEAN PATENT APPLICATION

(11) **EP 1 182 378 A2**
(43) Date of publication of application: **27.02.2002**
(21) Application number: 01307048.7
(22) Date of filing: 20.08.2001
(51) Int. Cl.: F16H 7/18

(54) **Chain or belt tensioner arm**

(30) Priority: 25.08.2000 GB 0020908
(71) Applicant: RENOLD Plc, Wythenshawe Manchester M22 5WL (GB)
(72) Inventor: Poiret, Christian, 62137 Coulogne (FR)
(74) Representative: Every, David Aidan

(57) **Abstract**

A chain tensioner blade having a supporting bracket (1) and a blade shoe (3) supported on the bracket (1) is described, wherein a resiliently deformable intermediate layer (2) is provided between the bracket and the shoe. The intermediate layer (2) is preferably rubber, and allows the shoe (3) to conform to the curvature of the chain. The contact stiffness between the chain and the tensioner blade is thereby reduced, resulting in a more even distribution of chain load, and enhanced wear and noise properties.

## Description

The present invention relates to a chain tensioner arm of the kind comprising a guide shoe for sliding contact with the chain or belt and a supporting member.

Internal combustion engines of motor vehicles often include a timing belt or chain drive that passes over sprockets on the crankshaft and camshaft and is used to ensure that the camshaft is driven synchronously with the crankshaft. The tension in such a chain or belt varies considerably as a result of the expansion and contraction of engine components with temperature, torsional vibrations imparted from the crankshaft and camshaft, the engine speed and chain elongation as a result of chain wear or temperature variations in chain components. It is important to impart to and maintain tension in the chain or belt so as to reduce noise and the likelihood of the chain or belt jumping from the teeth of the sprockets.

Tensioners for chains or belts generally comprise a housing that defines an open-ended cylinder in which a plunger is slidably movable in a longitudinal direction and is biased outwardly of the cylinder by a coil spring so as to impart tension to the chain or belt. A variable volume fluid pressure chamber is defined between a hollow in the plunger and the cylinder walls. A check valve permits hydraulic fluid to pass from a source such as an oil pump into the pressure chamber but prevents passage of fluid in the reverse direction. The fluid in the pressurised chamber also serves to bias the plunger out of the cylinder towards the chain or belt.

The plunger acts on a tensioner arm provided adjacent to a length of chain between sprockets. The arm is generally arcuate and comprises a blade spring on which is mounted a shoe that is in sliding contact with the chain or belt and guides the path thereof.

During use, heat generated from the engine and from the sliding friction between the shoe and the chain or belt causes the temperature of the shoe to increase. The shoe, which is generally constructed of a plastics material, becomes less rigid and deforms, allowing the blade spring to push the shoe against the chain, thus increasing chain tension.

US patents nos. 4 921 472, 5 711 732, and 5 984 815 all describe tensioner arms that formed of plastics material which are reinforced with metallic spring blades that impart a curvature to the shoe. US patents nos. 5 462 493 and 5 653 652 describe dual arm blades in which the blades comprise two arms placed on top of one another, each arm being pivotally mounted at opposite ends of the blade so that a plunger applied to a central area of the blade can move the central area of the blade outwardly by causing the arms to slide over one another. EP-A-0 193 802 describes a blade having a rigid bracket which has a resilient material arranged on the sliding surface thereof, the sliding surface being embedded with segments of an antifriction material.

The prior art tensioner arms are all relatively rigid owing to the need for the arm to withstand the high temperatures generated by the engine, and therefore the contact stiffness between the chain and the arm is high. This means that the chain load on the arm is not evenly distributed, leading to wearing of the shoe, and the generation of unwanted noise.

It is an object of the present invention to obviate or mitigate these disadvantages.

According to the present invention there is provided a chain or belt tensioner arm comprising a supporting member covered at least in part by a resiliently deformable layer, and a guide shoe fitted over the deformable layer.

The deformable layer allows the shoe to conform more easily to the curvature of the chain without impairing the ability of the shoe to withstand the high temperatures. As contact stiffness between the chain and the tensioner arm is reduced there is a more even distribution of chain load and reduced wear and noise. The guide shoe is disposed such that it may compress the deformable layer in response to forces applied by the chain or belt.

Preferably, the deformable layer is rubber. The rubber layer may be formed by rubberising a surface of the bracket, for example by heat treatment. Alternatively the rubber layer may be formed of rubber tape, which may be glued or otherwise secured to the bracket.

An embodiment of the present invention will now be described by way of example with reference to the accompanying drawings, in which:
Figure 1 is a cross-sectional view of a chain tensioner arm according to the present invention; and
Figure 2 is a graph showing the effect arm contact stiffness has on chain load at varying engine speeds.

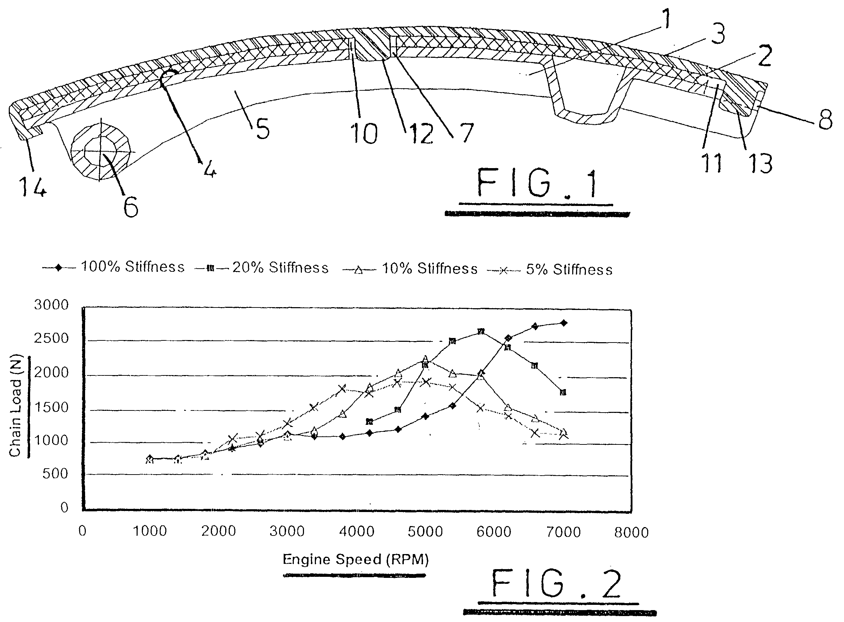

Referring to Figure 1 of the drawings, there is illustrated a chain tensioner arm comprising a bracket 1, an intermediate resilient layer 2 and a blade shoe 3.

The bracket 1 may be formed of metal or a plastics material, and is of a known shape, having a generally arcuate configuration with a top surface 4 and a stiffening web 5 provided on the underside of the bracket. It should be appreciated that the use of the terms "top" and "underside" are used for convenience with reference to the accompanying drawings, as the bracket may be used in any orientation.

A bore 6 is provided through one end of stiffening web 5, enabling the bracket 1 to be pivotally mounted on a support (not shown). Two apertures 7, 8 are provided through surface 4 of the bracket to enable the blade shoe 3 to be supported thereon, aperture 7 being positioned approximately in the centre of the bracket, and aperture 8 being positioned at the opposite end of bracket 1 to the bore 6.

The intermediate layer 2 is a resiliently deformable material of, for example 1 to 10mm thickness, and in this embodiment is rubber. It may be formed by rubberising the top surface 4 of bracket 1 by heat treatment, or may be a rubber tape that is glued to the bracket 1. The intermediate layer 2 has two apertures 10, 11, which align with apertures 7, 8 of bracket 1.

The blade shoe 3 is formed of a composite plastics material and is provided with two tabs 12, 13 which pass through apertures 10, 11 of the rubber layer 2 and clip into apertures 7, 8 of bracket 1. One end of the shoe 3 has a clip 14, which is slid over one end of both the bracket 1 and the layer 2 close to the bore 4 before tabs 12, 13 are clipped into position in order to hold the shoe 3 on to the bracket 1. The shoe 3 may alternatively be secured to bracket 1 and layer 2 by sliding engagement, moulding or any other means known to those skilled in the art.

As is well known in the art the tensioner arm is assembled on the cylinder block of an internal combustion engine with a hydraulic chain or belt tensioner of known configuration. The tensioner comprises a housing forming a hydraulic fluid chamber in which a plunger is reciprocally disposed and biased out of an open end of the housing by a spring and hydraulic fluid pressure. The plunger bears against the bracket to move the arm into tensioning abutment with the chain or belt.

The resilient layer 2 allows the shoe 3 to deform easily in order to comply with the chain curvature during use, thus reducing the contact stiffness between the chain and the shoe. The shoe simply compresses the resilient layer at the points of load. As can be seen from Figure 2, the reduction in contact stiffness evens out the distribution of chain load at varying engine speeds. The chain load is thus better distributed, reducing the wear of the shoe and the noise generated.

## Claims

1. A chain or belt tensioner arm comprising a support member covered at least in part by a resiliently deformable layer and a guide shoe fitted over the deformable layer.

2. A chain or belt tensioner arm according to claim 1, wherein the deformable layer is rubber.

3. A chain or belt tensioner arm according to claim 2, wherein the rubber layer is formed by rubberising a surface of the support member.

4. A chain or belt tensioner arm according to claim 2, wherein the rubber layer is formed of rubber tape.

5. A chain or belt tensioner arm according to claim 4, wherein the rubber layer is glued to the support member.

6. A chain or belt tensioner arm according to any preceding claim, wherein the guide shoe is connected to the support member.

7. A chain or belt tensioner arm according to claim 6, wherein the guide shoe is releasably connected to the support member.

8. A chain or belt tensioner arm according to claims 6 or 7, wherein the guide shoe has at least one connector that passes through the deformable layer and is connected to the support member.

9. A chain or belt tensioner according to any preceding claim, wherein the guide shoe is constructed from a plastics material.

10. A chain or belt tensioner substantially as hereinbefore described, with reference to Figure 1 of the accompanying drawings.
